# EUROPEAN PATENT APPLICATION

(11) **EP 1 736 931 A2**
(43) Date of publication of application: **27.12.2006**
(21) Application number: 06012764.4
(22) Date of filing: 21.06.2006
(51) Int. Cl.: G06T 15/70, G06F 17/30, H04M 1/725

(54) **Method and system for creating and distributing mobile avatars**

(30) Priority: 22.06.2005 US 692587 P; 10.08.2005 US 200226
(71) Applicant: Comverse Inc., Wakefield, MA 01880 (US); Comverse, Ltd., Tel Aviv 69710 (IL)
(72) Inventor: Ronen, Avner, Montvale, NJ 07645 (US); Ayres, Larry Edward, Andover, MA 01845 (US); Dagan, Tal, Tel Aviv, 69412 (IL)
(74) Representative: Dendorfer, Claus

(57) **Abstract**

A method and system for creating mobile avatars, customizing or personalizing mobile avatars and distributing mobile avatars including real-time updates thereof across a wireless network. A mobile avatar of a service subscriber is stored in mobile clients across the wireless network, and the mobile avatar is retrieved from the mobile clients and displayed upon receipt of a call from the service subscriber.

## Description

### CROSS-REFERENCE TO RELATED APPLICATIONS

This application claims the benefit of Provisional Application No. 60/692,587, filed on June 22, 2005, in the United States Patent and Trademark Office, the disclosure of which is incorporated herein by reference.

### BACKGROUND OF THE INVENTION

### 1. Field of the Invention

The present invention relates to creating and distributing mobile avatars. More particularly, the present invention relates to creating mobile avatars, customizing or personalizing mobile avatars and distributing mobile avatars including real-time updates thereof across a wireless network.

### 2. Description of the Related Art

As new channels of communication emerge, the ability to customize a personal experience has proven to be highly desirable by consumers. For example, as use of mobile devices became widespread, there was a focus on providing customized experience to users of the mobile devices. However, the focus was on locally customizing the mobile devices by implementing ring tones, wallpaper entertainment downloads, etc. As the market evolved to new customized aspects, the focus extended beyond locally customizing the mobile device, such as the growing ring-back tone market.

To address the need for consumers to personalize their Internet experience, some solutions have been provided that allow consumers to download personalized avatars to mobile devices. Such solutions centralized on use of avatars implemented via the Internet, where a user would access a web site that allows the user to create and download the avatar for local use. These typical solutions are restricted to local use of the avatars and do not extend use of the avatars beyond a particular mobile client or device.

Due to the static nature of existing implementations of avatars via mobile clients, users of a typical system are not able to personalize or update the avatars for selective self representation across a network. In addition, a typical system does not allow users to extend personal representation thereof to other users across a network via avatars.

Therefore, there exists a need for a system and method that allows users to create avatars and customize the avatars, and distribute the customized mobile avatars across a network. There also exists a need for transmitting a real-time update of a customizable avatar of a subscriber in accordance with caller identification information associated with the subscriber upon determining that the customizable avatar has been modified. Such a system and method enables users to personalize or customize their experiences in relation to services or resources provided across a network.

### SUMMARY OF THE INVENTION

It is an aspect of the present invention to customize a personal experience of a mobile device user by allowing the user to create an avatar or a virtual image representative of the user and distributing the avatar to other users over a network.

It is an aspect of the present invention to provide a user of a wireless network a method and system of creating a self-expression over the wireless network in accordance with a customizable of the user.

It is also an aspect of the present invention to advance the concept of customized push entertainment where customized information of a user is pushed or transmitted to other users of a network.

It is another aspect of the present invention to provide a real-time or dynamic update of a customizable avatar of a subscriber for storage in mobile devices across a network in accordance with caller identification information associated with the subscriber.

It is a further aspect of the present invention to provide a system for distributing mobile avatars across a wireless network by storing the mobile avatars in association with caller identification information of mobile clients and distributing the mobile avatars to the mobile clients in accordance with caller identification information of a call executed between the mobile clients.

According to an aspect of the present invention, automatic update of a mobile avatar associated with a service subscriber is executed in mobile clients of a network in accordance with subscription information identifying the service subscriber to be displayed via the mobile clients upon receipt of a call from the service subscriber.

It is an aspect of the present invention to determine whether a mobile avatar stored in a mobile client of a wireless network matches a current mobile avatar of a subscriber to enable distribution of the current mobile avatar to the mobile client.

It is also an aspect of the present invention to provide a system for distributing mobile avatars across a wireless network, where the system includes a plurality of mobile clients that exchange the mobile avatars across the wireless network, and a server having a database storing the mobile avatars in association with caller identification information of the mobile clients.

The above and other aspects of the present invention may be attained by a system and method that verifies whether a recipient of a call is registered to a mobile avatar caller identification service of a subscriber and transmits a mobile avatar of the subscriber to a mobile device of the recipient based on caller identification information of the subscriber upon verifying that the recipient of the call is registered to mobile avatar caller identification service of the subscriber.

An aspect of the present invention also provides a system for distributing mobile avatars across a wireless network, including a plurality of mobile clients exchanging mobile avatars corresponding to the mobile clients based on caller identification information, and a server monitoring status of the mobile avatars and correspondingly downloading real-time updates of the mobile avatars to the mobile clients.

It is a further aspect of the present invention to determine whether a mobile client has stored therein a mobile avatar associated with caller identification information of an incoming call, to verify whether the mobile avatar stored in the mobile client is a current version of the mobile avatar and to connect the incoming call upon verification that the current version of the mobile avatar is stored in the mobile client and display the updated version of the mobile avatar using the mobile client.

According to an aspect of the present invention mobile avatars are stored locally based on caller identification information, and a real-time update of at least one of the mobile avatars is executed upon determining that the mobile avatars has been updated.

These together with other aspects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Figure 1 illustrates an operation of creating a mobile avatar according to an embodiment of the present invention.

Figures 1A, 1B and 1C illustrate an operation of creating a mobile avatar according to an embodiment of the present invention.

Figures 2 and 2A illustrate an operation of creating a mobile avatar and customizing the mobile avatar according to an embodiment of the present invention.

Figure 3 illustrates association or linkage of caller identification information to mobile avatars using which the mobile avatars are distributed upon an incoming call according to an embodiment of the present invention.

Figure 4 is a diagram illustrating use of a mobile avatar in a wireless network according to an embodiment of the present invention.

Figure 5 is a diagram illustrating an operation of checking a version of an avatar and pulling an avatar when an update of the avatar is required according to an embodiment of the present invention.

Figure 6 is a diagram illustrating operations of pre-storing a mobile avatar using a called party handset according to an embodiment of the present invention.

Figure 7A illustrates an operation of displaying a mobile avatar of a subscriber using a mobile client of a recipient receiving a call from the subscriber according to an embodiment of the present invention.

Figure 7B illustrates an operation of displaying a mobile avatar of a subscriber using a mobile client of a user making a call to the subscriber according to an embodiment of the present invention.

Figure 8 is a diagram illustrating an operation of determining whether a mobile avatar matches a current mobile avatar of a subscriber and automatically downloading real-time update to the mobile client upon determining that the mobile avatar does not match, according to an embodiment of the present invention.

Figure 9 illustrates a data structure for distributing a mobile avatar across a network according to an embodiment of the present invention.

Figure 10 illustrates system components for distributing mobile avatars according to an embodiment of the present invention.

Figure 11 is diagram illustrative of a system architecture according to an embodiment of the present invention.

### DESCRIPTION OF THE PREFERRED EMBODIMENTS

Reference will now be made in detail to the present invention, examples of which are illustrated in the accompanying drawings.

This invention is directed to enabling a subscriber to create a mobile avatar representative of a personal expression of the subscriber and allowing the subscriber to distribute the mobile avatar to other subscribers in a wireless network. The mobile avatar of the subscriber is distributed to the other subscribers when an operation is executed using subscription information that identifies the subscriber.

Although use of a mobile avatar is discussed herein in relation to a mobile client or a mobile device over a wireless network, the present invention is not limited to use of the mobile avatar with a mobile client. For example, use of a mobile avatar as an expression of a subscriber may be implemented with other devices that utilize caller identification information identifying the subscriber across a network. Similarly this invention may be implemented with use of subscriber identification information when receiving and/or transmitting data based on the identification information associated with the subscriber, such as avatar forums over the Internet or communities over the Internet, chat rooms, blogs, electronic mails, avatar greeting cards, etc. In addition, personalized use of avatars as discussed herein may be implemented in existing services, such as avatar caller ID, FunDial, SMS avatar ID, SMS avatar ID and signature, Avatar MMS signature, PoC avatar, video call avatar, wall paper avatar and other similar services and/or resources.

The reference to "a mobile avatar" or "avatar" herein, includes any graphical representation that is a virtual representation of a user, such as photographs, images, cartoons, icons, or any representation of a user in a virtual world that a user chooses. A mobile avatar may represent a user in a variety of places and in association with various services by allowing the user to create a virtual alter ego or representation of self expression including how the user looks or how the user would like to look, how the user feels, etc. For example, a user may use a mobile avatar in online virtual communities, Internet forums, instant messaging, etc., as a graphical representation of the user to be displayed when the user utilizes such services. The user may have multiple avatars such as one for business communication and one for personal communication.

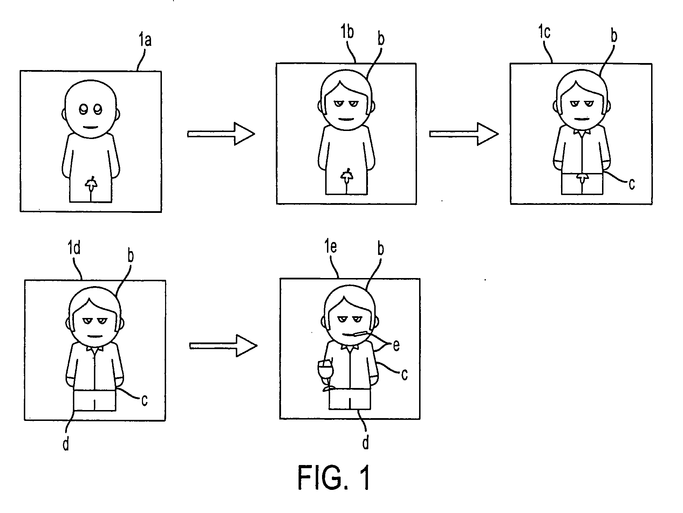

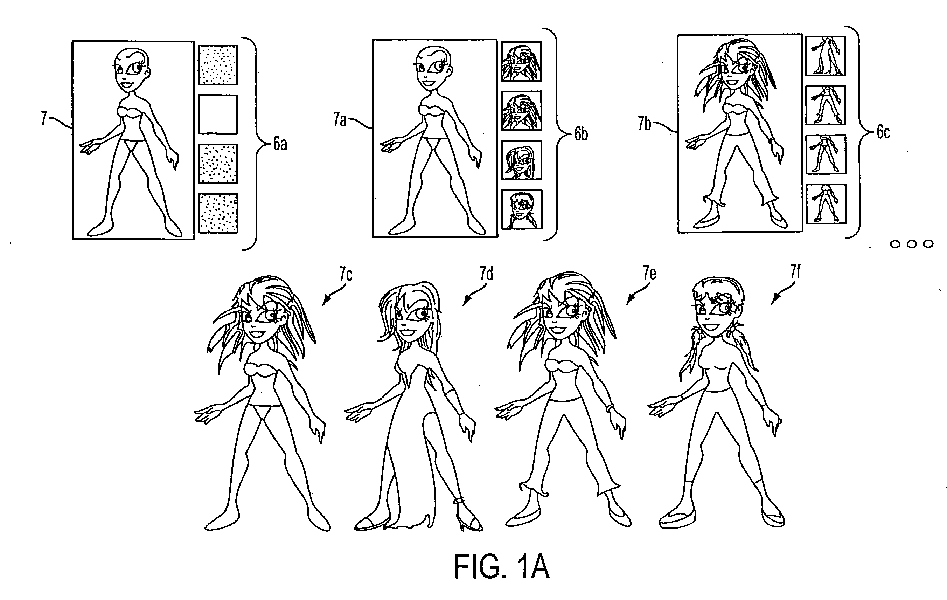

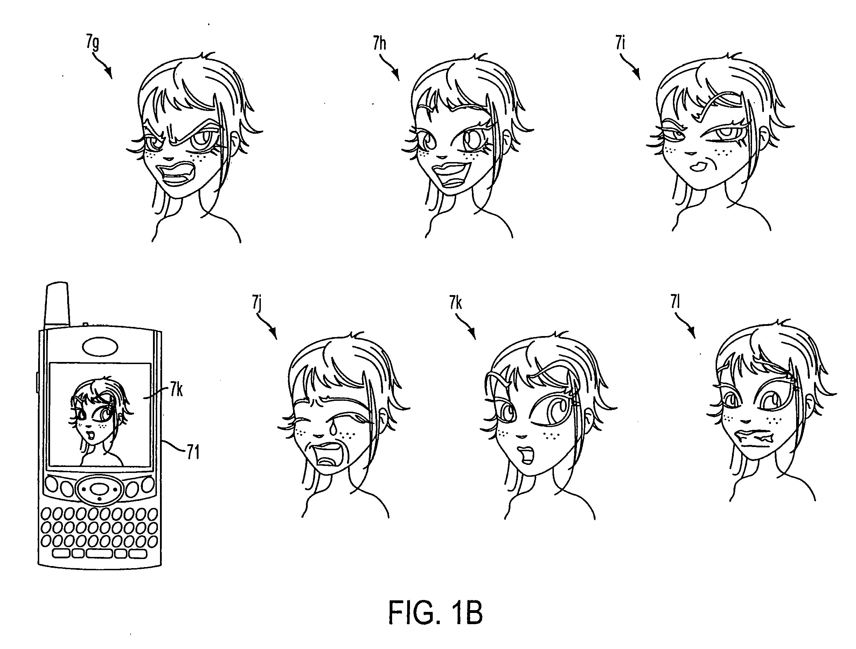

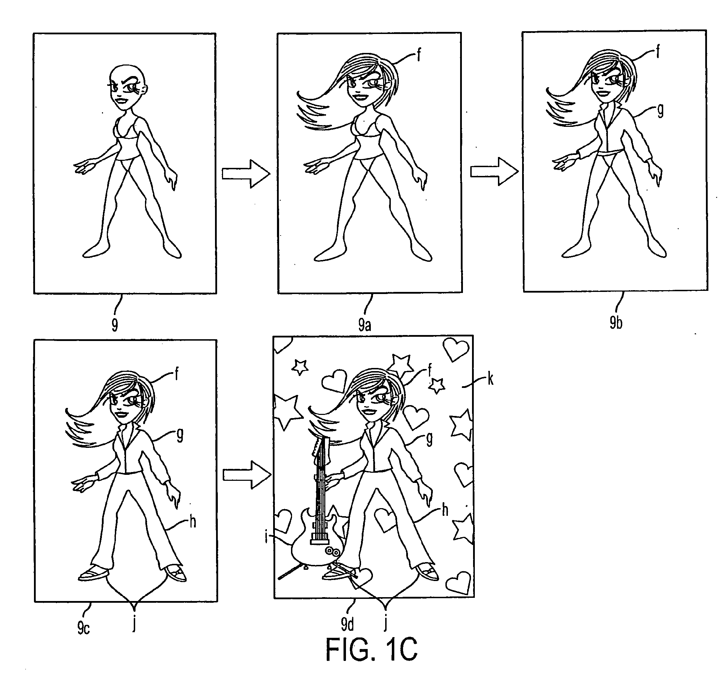

Fig. 1 is a diagram illustrating an operation of creating a mobile avatar. According to an embodiment of the present invention, a user may create a mobile avatar by using an existing Internet service offering a broad array of resources for creating mobile avatars. As illustrated in Fig. 1, one such Internet service provider is Saw-you of 2 Clifton Street, Glasgow G3 7LA, United Kingdom.

As illustrated in Fig. 1, mobile avatars 1a, 1b, 1c, 1d, and 1e are customized using different elements or accessories. For example, in comparison to mobile avatar 1a, mobile avatars 1b and 1c are provided with additional features or elements. Mobile avatar 1b is provided with a hair (feature b) and mobile avatar 1c includes a shirt (feature c) in addition to feature b of mobile avatar 1b. Similarly, mobile avatars 1d and 1e include a pant (feature d) and accessories (features e), respectively, in addition to feature b of mobile avatar 1b and feature c of mobile avatar 1c. While Fig. 1 is described using accessories to a mobile avatar of a human-like representation, the present invention is not limited to mobile avatars representative characteristics of persons. For example, a user may create a mobile avatar of a company logo or other objects such as a picture or other image to represent the user, essentially as the caller ID. The present invention also allows a user to select from pre-created mobile avatars and use a selected mobile avatar in association with subscription information of the user.

Referring to the example of Fig. 1, users are able to log into a web site through a browser provided by standard web servers having a three-layer architecture to support the abstraction between the data layers and the user access to create an avatar. While creation of an avatar in Fig. 1 is described using a browser, the present invention is not limited to creating an avatar using any particular browsers. The present invention may be implemented using other user interfaces that provide users with the ability to customize or personalize an avatar.

Figs 1A and 1B illustrate an operation of creating a mobile avatar according to an embodiment of the present invention. As illustrated in Fig. 1A, options 6a, 6b and 6c are provided to a user to enable customization of mobile avatars 7, 7a and 7b, respectively. In Fig. 1A, option 6a allows a user to select skin color for mobile avatar 7, option 6b allows the user to select from hair types for mobile avatar 7a and option 6c allows the user to select from types of clothes for mobile avatar 7b. Accordingly, a user is able to create personalized or customized mobile avatars 7c, 7d, 7e and 7f.

Referring to Fig. 1B, users are able to customize moods of mobile avatars 7g, 7h, 7i, 7j, 7k and 7l. Mobile avatars 7g through 71 indicate various human expressions or moods, such as anger, happiness, fear, surprise, etc. As shown in Fig. 1B, the present invention enables a user to utilize mobile avatar 7k, for example, to represent the user across a network (not shown) by displaying the mobile avatar 7k using a mobile client 71 of the network. While customizing mobile avatars in Figs. 1A and 1B are described using avatar moods, hair type, clothing, etc., the present invention is not limited to customizing avatars in any particular way. For example, as previously mentioned, mobile avatars may be representative of a company logo, a trademark, or any image/picture a user selects to represent the user across a network.

Fig. 1C illustrate an operation of creating a mobile avatar according to an embodiment of the present invention. As shown in Fig. 1C, the present invention enables a user to customize a mobile avatar 9 using different elements or accessories to create customized mobile avatars 9a, 9b, 9c and 9d. For example, the user is enabled to add hair (feature f) to the mobile avatar 9 to create mobile avatar 9a, a jacket (feature g) to mobile avatar 9a to create mobile avatar 9b, etc. Similarly, the user may add shoes (feature j) and a pant (feature h) to mobile avatar 9b and a guitar (feature i) and a background (feature k) to mobile avatar 9c to create mobile avatar 9d. While Fig. 1C illustrates addition of elements to mobile avatar 9, ultimately resulting in the creation of mobile avatar 9d, the present invention is not limited to any particular customization of a mobile avatar.

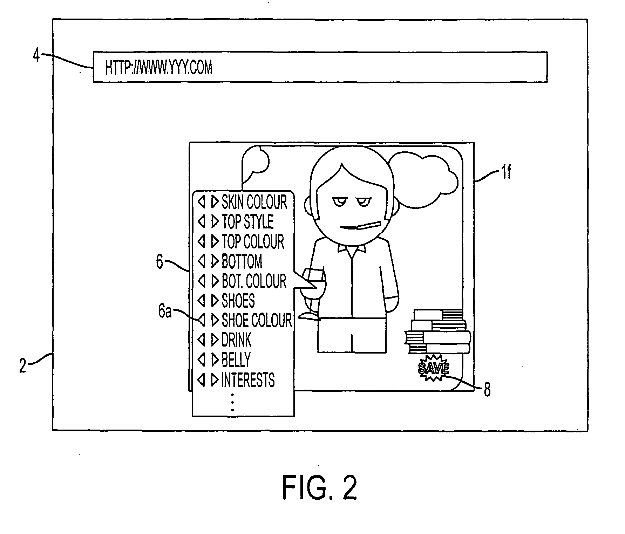

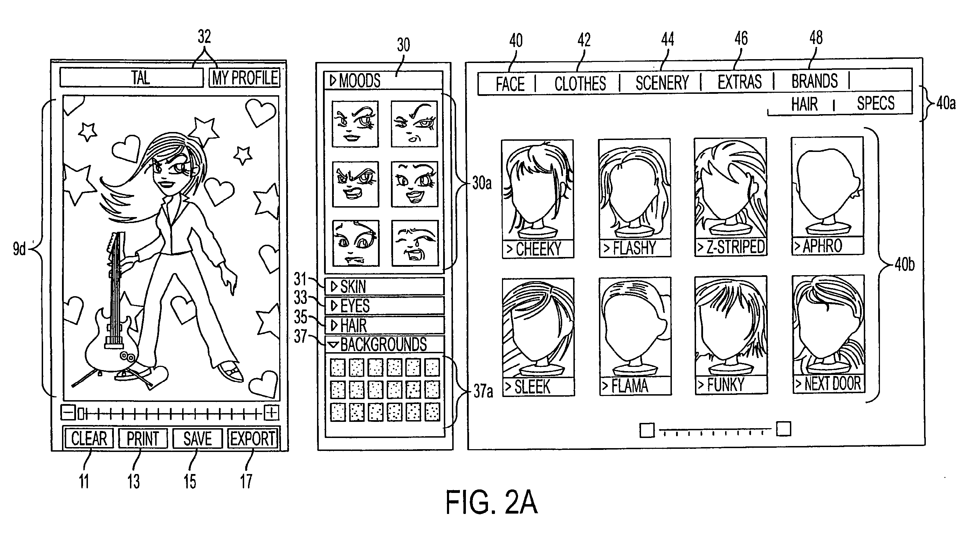

Fig. 2 illustrates an operation of creating a mobile avatar and customizing the mobile avatar based on options provided to a subscriber. As mentioned above, a user may create a mobile avatar using a service provided over the Internet. A user accesses an avatar web portal 2 located at a URL 4 to create a mobile avatar to be used for as a representation of the user across the user's subscribed services. The user may be referred to the URL 4 in response to a promotion activity, an invitation from another subscriber, etc.

Referring to the example of Fig. 2, the avatar web portal 2 allows the user to select various demographic attributes, such as color, hairstyle, mood, etc., fashion accessories and backgrounds to be associated with the user's mobile avatar. The user will also be given the opportunity to select from premium items or attributes for the user's mobile avatar. For example, the user may select brand name items like a Nike™ sneakers, or Red Sox™ T-shirt for the mobile avatar. The user may also be provided with an option of publishing the mobile avatar at the URL 4 including an option of providing an avatar nickname, the user's name, etc. Further, the user may be provided with an option to transfer the user's mobile avatar for use in connection with other services, such as a desktop wall paper, an electronic mail signature (i.e., using Outlook, Hotmail, Gmail, etc...), Internet forums, chat rooms, Internet dating services, blogs, web pages, instant messaging service, etc.

The avatar web portal 2 of Fig. 2 also provides the user with the opportunity to invite other users to create and exchange mobile avatars. For example, the user can send electronic messages inviting other users in a network to access and create mobile avatars by accessing the URL 4. The invitation extended to users in the network may include the mobile avatar of the user extending the invitation, and be based predefined text invitation or the user's own text. While the option of sending invitations to other users is described using an electronic mail, the present is not limited to using an electronic mail to send requests to other users. For example, users may receive invitations to participate in an avatar caller ID service from the user who has created a mobile avatar via a SMS or MMS message with calling line identification information that includes a password corresponding to each of the users.

Information of the user who has created the mobile avatar will be published at the URL 4 such that another user requested to join the services of the avatar web portal 2 will be provided with an invitation indicating origin of the invitation, services provided, operations necessary to join the services, etc. For example, "click if you want to define how John sees YOU on HIS Mobile phone when you call", etc, is sent as invitation. When the SMS/MMS message is received, a joining user enters subscription information and a corresponding password for authentication. Upon creation of the mobile avatar, the user is provided with a save option 8 so that the mobile avatar of the user is stored in a database for later usage.

The user who has created the mobile avatar will be provided with an avatar caller ID identifying information of the user so that other users are enabled to determine whether to accept an invitation to join the services sent from the user. For example, invited users are provided with an avatar caller ID identifying information including a number of users signed to a particular service, a number of avatars created to-date and identity information, etc.

The avatar web portal 2 of Fig. 2 is not limited to being accessible to a user with an invitation from another user. For example, a user may become aware of the avatar web portal 2 through other means, such as marketing or advertising information, publications distributed in relation to the avatar web portal 2 and services thereof. The user then accesses the avatar web portal 2 and registers to receive services of the avatar web portal 2. The user may also send a request to another user to register to the avatar web portal 2, who will be requested to enter identification data of mobile client, such as a phone number and user identification information, if the user wants to benefit from the services. The joining user may receive an invitation to join the services via a SMS message or upon subsequent connection to a server (pull) housing the avatar web portal 2 and services related thereto.

As shown in Fig. 2, option menu 6 is provided to allow the user to customize mobile avatar 1f. For example, option menu 6 includes selections for skin color, top style, top color, bottom, bottom color, shoes, shoe color, drink, belly, interest, etc. The user selects an attribute (shoe color 6a) from the option menu 6 and the mobile avatar 1f is customized or personalized accordingly.

Figure 2A illustrate an operation of creating a mobile avatar and customizing the mobile avatar using mobile avatars available from Comverse™, Ltd. of 29 Habarzel St., Tel Aviv 69710, Israel. As shown in Fig. 2A, the mobile avatar 9d is displayed with subscription information 32 identifying a user or a service subscriber associated with the mobile avatar 9d. The mobile avatar 9d is displayed with options 11, 13, 15 and 17 to allow execution of different processes with respect to the mobile avatar 9d. For example, a user can clear, print, save and export the customized mobile avatar 9d by using the options 11, 13, 15 and 17. While Fig. 2A is described using options 11, 13, 15 and 17, the present invention is not limited to any particular options for manipulating a mobile avatar to customize the mobile avatar.

Referring to Fig. 2A, a user may also select various options to customize features of the mobile avatar 9d. Features of the mobile avatar 9d may be customized using various option menus provided for manipulating different features of the mobile avatar 9d. For example, option menu 30 allows customization of a mood of the mobile avatar 9d using selectable options 30a, option menu 37 allows customization of the background (feature k shown in Fig. 1c) using selectable options 37a, and option menu 40 allows the user to customize the hair style of the mobile avatar 9d using selectable options 40a and 40b. As also shown in Fig. 2A, option menus 31, 33 and 35 allow customization of features with respect to skin, eye and hair of the mobile avatar 9d, respectively, and option menus 42, 44, 46 and 48 allow selective customization of clothes, scenery, extras, brands with respect to the mobile avatar 9d, respectively.

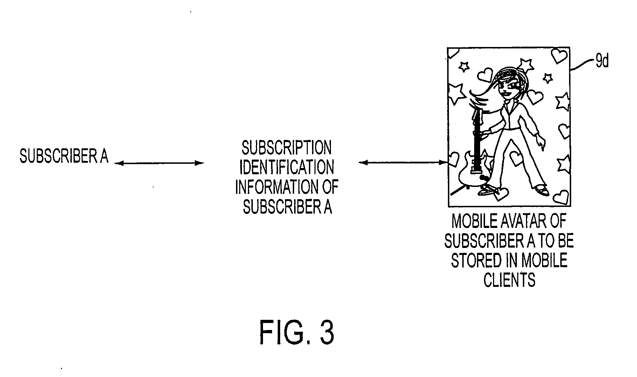

As described in detail in connection with Figs. 3-10, after the user creates the mobile avatar, the present invention enables the mobile avatar to be pushed or downloaded to mobile clients across a network to be used with calls exchanged across the network.

Fig. 3 illustrates association or linkage of caller identification information to a mobile avatar of a subscriber A according to which the mobile avatar is distributed across a network. Reference to caller identification information of a user herein refers to data of a calling number and information of a user associated therewith. Telephony services that transmit and display the calling number via a mobile client of a recipient of the call are commonly referred to as calling line identify (CLID), caller identity display (CID), calling line identification (CLI), calling line identification presentation (CLIP). Other identification information would also be used, such as a URL.

Referring to Fig. 3, in a preferred embodiment, the mobile avatar of subscriber A to be stored in mobile clients of a network is stored in association with subscriber A and subscription identification information of subscriber A. Subscription information of subscriber A is linked with calling line identity information of the subscriber A and the mobile avatar 9d of the subscriber A and is transmitted to mobile clients across a network. The mobile avatar 9d is stored in the mobile clients in the network and the mobile avatar 9d is retrieved in accordance with the linkage for displaying the mobile avatar 9d upon receipt of an incoming call or other "connection" from the subscriber A.

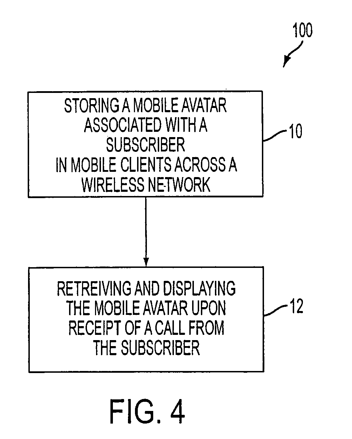

As illustrated in Fig. 4, in a preferred embodiment, process 100 of the present invention includes operations 10 and 12. In operation 10, a mobile avatar of a service subscriber is stored in mobile clients across a wireless network. The mobile avatar of the subscriber will also be stored in a central network-based storage as well as in mobile clients across the wireless network.

Referring to Fig. 4, in operation 12, the mobile avatar stored in the mobile clients in operation 10 is retrieved from the mobile clients and displayed upon receipt of a call from the service subscriber. Retrieval and display of the mobile avatar is discussed in detail below.

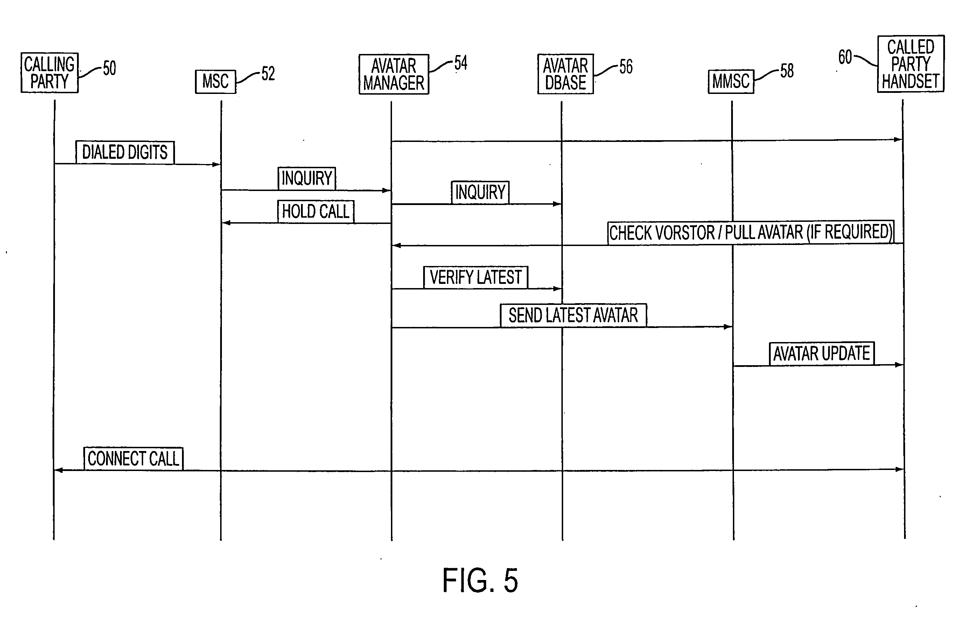

Fig. 5 is a diagram illustrating, in a preferred embodiment, an operation of checking a version of an avatar or pulling an avatar when an update of the avatar is required. As explained in relation to Figs. 1-4, a subscriber is able to create a mobile avatar using the Internet a browser interface. The mobile avatar of the subscriber is stored in the network central database accessible by an avatar manager 54 shown in Fig. 5.

When the subscriber sends an invitation or a link to another user indicating how to initiate the service, the avatar manager 54 sends a WAP (wireless application protocol) push or a binary SMS message, which will awake the client in the HS and initiate a HTTP connection to get the avatar message requesting that a joining user download the mobile avatar of the subscriber including client applications related thereto. This allows the joining user to be provided with access information instantly via the joining user's mobile client, smart phone, etc. The avatar manager 54 maintains historical data of which users receive the mobile avatar of the subscriber. Accordingly, when the subscriber makes future modifications to the mobile avatar, the historical information is used to update the mobile clients of all users who have a previous version of the subscriber's mobile avatar stored therein.

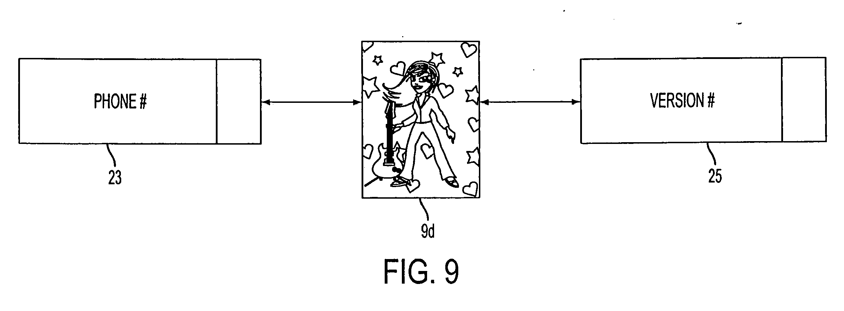

When a user joins an avatar caller ID service, a client application will be downloaded to a mobile client of the user to interact with an avatar server (84 in Fig. 9) and local phone APIs (application program interface) (not shown). The client application provides network access for downloading including access to a local address book through standard PIM or APls, access to TAPI (telephony application programming interface) information to examine the CLID of an incoming call, local access to file systems on a mobile client of a new user for avatar image storage and matching to appropriate contact information, network access to a MMSC 58 (multimedia messaging service centre) of Fig. 5 to download the mobile avatar and pull updates, as required, and real-time match of stored avatar image in local storage to CLID. The client also allows the user to change the user's avatar from the handset, and save the change to a server storing the user's avatar.

Referring to Fig. 5, when a calling party 50 makes a call to a user of a called party handset 60, phone number and identification information of the calling party 50 is sent to the avatar manager 54 via a MSC (mobile switching centre) 52. The avatar manager 54 initiates a determination as to whether there is a mobile avatar stored in association with the calling party 50 by sending an inquiry to an avatar database 56. When it is determined that there is a mobile avatar stored in association with the calling party 50, the call can be intercepted or held to determine if a current version of the mobile avatar of the calling party 50 exists in the called party handset 60. The determination of whether a current version of the mobile avatar of the calling party 50 exists in the called party handset 60 may also be periodically executed such that the current version of the mobile avatar is transferred to the called party handset 60 before a call occurs.

As shown in Fig. 5, a MMSC 58 sends a message to the called party handset 60 to check if a current version of the mobile avatar of the calling party 50 exists in the called party handset 60. The called party handset 60 communicates with the avatar manager 54 to indicate a version the mobile avatar stored in the called party handset 60. The mobile avatar manager 54 compares the version of the mobile avatar stored in the called party handset 60 and the current version of the mobile avatar to determine if there is a need to send the current version or an avatar update to the called party handset 60. When it is determined that the current version of the mobile avatar is stored in the called party handset 60 or upon downloading the current version of the mobile avatar to the called party handset 60, the call from the calling party 50 is connected and the current avatar is displayed.

Another way in which this update can occur is for the handset 60 to essentially intercept the call, initiate the update and request an update or version identifier upon receiving the identifier of the caller, compare the version identifier to that in the handset 60 and request a download if the current version is not stored in the handset 60.

As illustrated in Fig. 5, the present invention may be implemented via standard phone APls that allow access to a local address book and storage, thereby allowing a subscriber's mobile avatar to be downloaded and linked to the address book phone number in the hand set 60. The called party handset 60 actively waits for an incoming call to present a mobile avatar of the calling party 50 or pull down a current version of the mobile avatar of the calling party 50. For example, the incoming call is accessed through TAPI APls to look for a locally stored mobile avatar, and when it is found, it is verified with the avatar database 56 to determine the locally stored mobile avatar is current. While Fig. 5 is described using call intercept to verify status of the mobile avatar, the present invention may be implemented during a call conversation or at an end of a conversation rather than via an intercept.

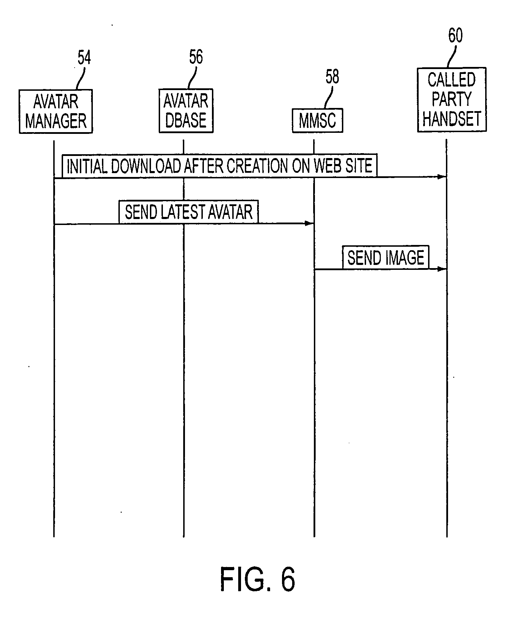

The avatar manager 54 downloads mobile avatars of new users to corresponding mobile phones after service activation, serves calls that the MSC 52 determines to be processed for a calling line identification avatar service, and monitors status of mobile avatars for downloading across a network before a call setup, when required. The avatar manager 54 is also responsible for updates directed to mobile clients to be updated outside of a call setup (discussed using Fig. 6), and provides typical server functionality such as billing, alarms, etc.

Fig. 6 is a diagram illustrating operations of pre-storing a mobile avatar in a called party handset 60 and can also be used to push an update if needed. When a user of the called party handset has accepted invitation to use services associated with a subscriber's mobile avatar, the avatar manager 54 sends a message requesting the user of called party handset 60 to download a mobile avatar client application. When the user of called party handset 60 downloads the mobile avatar client application, the avatar manager 54 automatically sends a latest version of the mobile avatar of a subscriber with whom the user has registered to exchange mobile avatars.

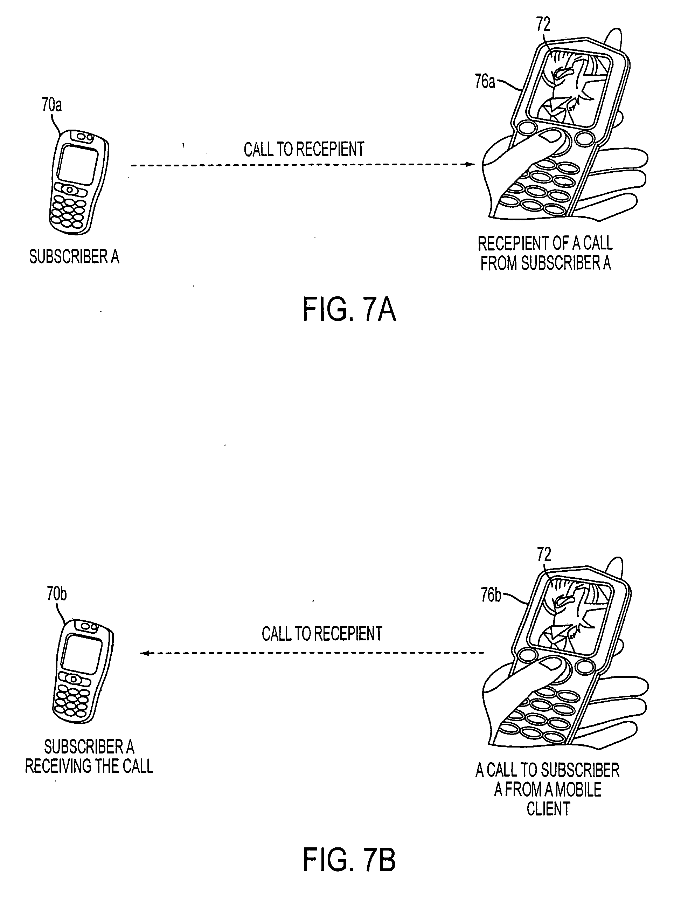

Fig. 7A illustrates an operation of displaying a mobile avatar of a subscriber using a mobile client of a recipient receiving a call from the subscriber. When a call is made from a mobile client 70a, a mobile avatar 72 of the subscriber A is displayed via a mobile client 76a of a recipient of the call. The avatar manager 54 of Figs. 5 and 6 determines whether the mobile avatar 72 is stored in association with the subscriber A. When it is determined that a current version of the mobile avatar 72 of the subscriber A is in the mobile client 76a of the recipient or upon downloading the current version of the mobile avatar 72 to the mobile client 76a of the recipient, the mobile avatar 72 of subscriber A is displayed via the mobile client 76a of the recipient. This involves accessing the contact number database or address book of the telephone, checking to see if an avatar is stored for that number, and retrieving the corresponding avatar (and version number as needed) and displaying same. Thus, the mobile client 76a obtains the mobile avatar 72 associated with mobile client 70a, stores the mobile avatar 72 and displays the mobile avatar 72 using a picture caller identification functionality of the mobile client 76a.

Fig. 7B illustrates an operation of displaying a mobile avatar of a subscriber using a mobile client of a user making a call to the subscriber. When a call is made to subscriber A from a mobile client 76b, the mobile avatar 72 of subscriber A will be displayed using a mobile client 76b of a calling party making the call. Similar to the operations discussed in Fig. 7A, the avatar manager 54 determines whether the mobile avatar 72 of the subscriber A is stored in the mobile client 76b of the calling party. When it is determined that a current version of the mobile avatar 72 of the subscriber A is in the mobile client 76b of the calling party or upon downloading the current version of the mobile avatar 72 to the mobile client 76b, the mobile avatar 72 is displayed via the mobile client 76b when a user uses the mobile client 76b to call subscriber A.

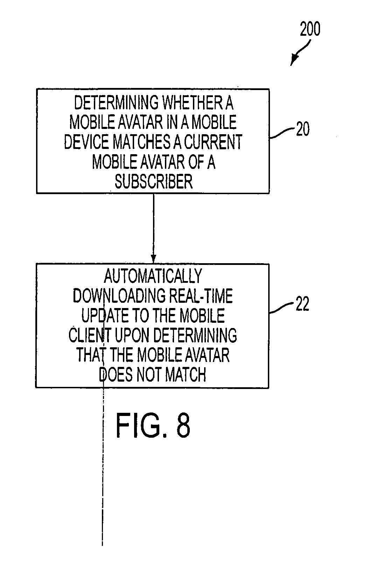

As illustrated in Fig. 8, process 200 of the present invention includes operations 20 and 22. In operation 12, the present invention determines whether a mobile avatar stored in a mobile client of a wireless network matches a current mobile avatar of a subscriber. As mentioned above, the subscriber will be able to customize how a mobile avatar associated with the subscriber will be displayed. For example, the subscriber may modify the mobile avatar 1d of Fig. 1 to look like the mobile avatar 1e of Fig. 1. In operation 12 of Fig. 8, it is determined whether a mobile avatar stored in a mobile client matches the updated or current mobile avatar of the subscriber (mobile avatar 1e of Fig. 1, for example). While operation 12 is described in relation to modifying the appearance of the mobile avatar, the present invention is not limited to modifications to mobile avatars based on appearance. For example, a subscriber may define a rule to change or modify a mobile avatar based on conditions, such as changing the mobile avatar based on time of the day, based on a current physical environment of the subscriber and/or mood, etc. Additionally, a subscriber may to have more than one avatar associated with calling line identification or subscription information of the subscriber, thereby allowing the subscriber to have a professional and personal avatar, for example, to be used in separate calls.

Referring to Fig. 8, in operation 22, the present invention automatically downloads the current mobile avatar to the mobile client upon determining that the mobile avatar in the mobile client does not match the current mobile avatar of the subscriber in operation 12. The mobile avatar of the subscriber will be stored in network-based storage to allow use in a telecom real-time environment. Each new update will be flagged as 'modified' and indicates whether there has been a change to the mobile avatar of the subscriber when the mobile avatar stored in the mobile client is compared with a current mobile avatar stored in association with the subscriber.

Fig. 9 Figure 9 illustrates a data structure for distributing a mobile avatar across a network. A mobile avatar 9d of a user is stored in association with phone number 23 of the user. The mobile avatar 9d of the user may also be stored in association with information identifying the user as a calling party. The mobile avatar 9d of the user is also associated with a version number 25 that indicates any changes to the mobile avatar 9d.

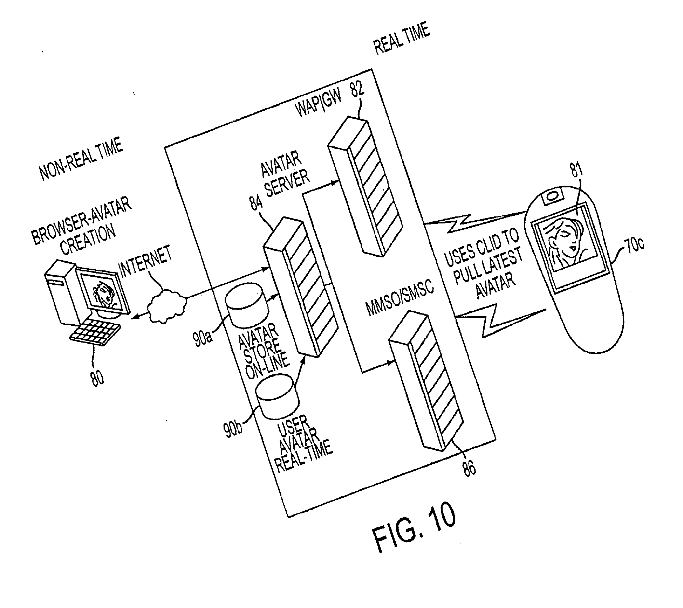

Fig. 10 illustrates system components for distributing mobile avatars according to an embodiment of the present invention. A user may create a mobile avatar 81 by accessing the Internet using a personal computer 80 or using a mobile client 70c. The user created mobile avatar 81 is then stored to an avatar server 84 connected with databases 90a and/or 90b. The user created mobile avatar 81 may also be stored in a database provided to the avatar server 84 (not shown). The avatar server 84 communicates with WAP GW 82 and MMSC/SMSC 86 to transmit/receive the mobile avatar 81 and information thereto. The mobile avatar 81 may be transmitted to the databases 90a and 90b in real-time or in a non-real time mode.

The MMSC/SMSC 86 downloads avatar updates to mobile clients or handsets and provides an interface with the avatar manager 54 across an MM7 (multimedia messaging reference point 7) (SOAP/HTTP) for downloading mobile avatars. The databases 90a and 90b store the avatars developed off-line from the Internet, and replicate for real-time handling during a call setup, when the mobile avatar has been updated.

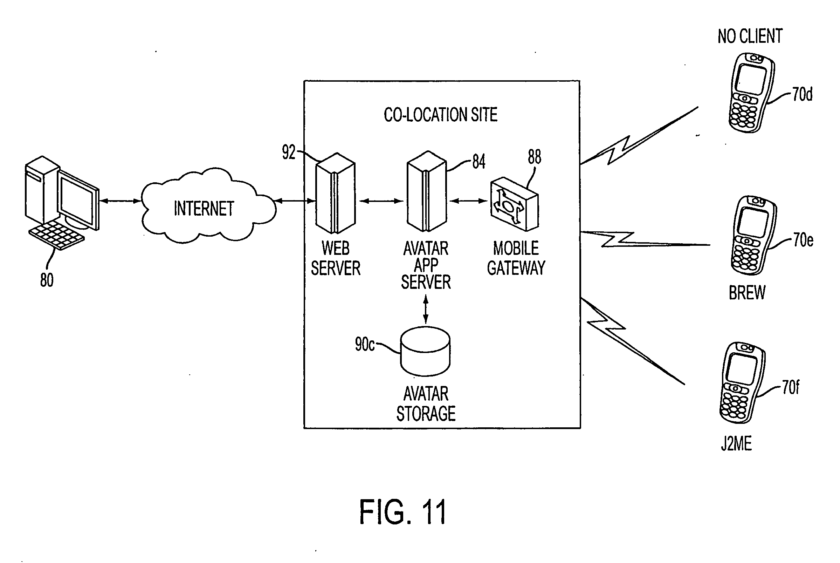

Fig. 11 is diagram illustrative of a system architecture according to an embodiment of the present invention. As shown in Fig. 10, a system of the present invention implements the above described aspects using a personal computer 80, mobile clients 70d, 70e and 70f, a web server 92, an avatar application server 84, a mobile gateway 88 and an avatar storage 90c.

Referring to Fig. 11, a user creates a mobile avatar using a personal computer 80 and the mobile avatar is sent to mobile clients 70d, 70e and 70f via the avatar application server 84 via the web server 92. Mobile clients 70d, 70e and 70f may be symbian, BREW (binary runtime environment for wireless) or J2ME (Java 2 platform micro edition) enabled and display the mobile avatar upon a receipt of a call for the user. The mobile avatar may be displayed based on a setting defined by the user, such as a specific period of time for displaying the mobile avatar, etc.

When the mobile avatar is updated, the updated mobile avatar of the user is transmitted to mobile clients 70d, 70e and 70f such that the updated mobile avatar is displayed when a call is received or is made in relation to the user.

Accordingly, the present invention enables transmission a new service to mobile operators by creating a new differentiating service and allowing the flow of personalized content between the mobile operators.

The many features and advantages of the invention are apparent from the detailed specification and, thus, it is intended by the appended claims to cover all such features and advantages of the invention which fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. A method of using a mobile avatar in a wireless network, comprising:
storing a mobile avatar of a service subscriber in mobile clients across the wireless network; and
retrieving the mobile avatar from a mobile client and displaying the mobile avatar at the mobile client upon receipt of a call associated with the service subscriber.

2. The method according to claim 1, wherein the call associated with the service subscriber is from the service subscriber to the mobile client.

3. The method according to claim 1, wherein the mobile avatar is customized by the service subscriber and the customized mobile avatar is displayed upon receipt of the call from the service subscriber.

4. The method according to claim 3, wherein the mobile avatar is customized responsive to a selection of the service subscriber from a list of predetermined mobile avatars.

5. The method according to claim 3, wherein the mobile avatar is customized using a mobile client of the service subscriber.

6. The method according to claim 3, wherein the customized mobile avatar is loaded to the mobile client during a call setup.

7. The method according to claim 1, wherein the mobile avatar is inserted in an electronic mail.

8. The method according to claim 1, wherein the mobile avatar is used with an instant messaging service.

9. The method according to claim 1, wherein the mobile avatar is transmitted to the mobile clients using a short message service message.

10. The method according to claim 1, wherein the mobile avatar is created using an Internet avatar creation service.

11. The method according to claim 1, wherein the mobile avatar is displayed in accordance with a predetermined setting defined by the service subscriber.

12. The method according to claim 11, wherein the predetermined setting defined by the service subscriber is a specific period of time and the mobile avatar is displayed via the mobile clients when the call is received within the specific period of time defined by the service subscriber.

13. The method according to claim 1, wherein the mobile clients are symbian, BREW or J2ME enabled.

14. The method according to claim 1, wherein the mobile avatar is transmitted to the mobile clients using a multimedia message service.

15. A method of using a mobile avatar in a wireless network, comprising:
storing a mobile avatar of a service subscriber in mobile clients across the wireless network; and
automatically updating the mobile avatar in the mobile clients in accordance with subscription information identifying the service subscriber and displaying the mobile avatar via the mobile clients upon receipt of a call from the service subscriber.

16. The method according to claim 15, wherein the mobile avatar is updated during a call setup.

17. The method according to claim 15, wherein the automatic update of the mobile avatar is triggered by a short message service message sent to the mobile clients.

18. The method according to claim 15, wherein the updating of the mobile avatar is executed upon verification of subscription information corresponding to the mobile clients.

19. A method of modifying a customizable avatar in mobile devices of a network, comprising:
transmitting a real-time update of a customizable avatar of a subscriber for storage in the mobile devices across the network in accordance with caller identification information associated with the subscriber upon determining that the customizable avatar has been modified.

20. The method according to claim 19, wherein a flag is added to the customizable avatar each time the customizable avatar is modified to trigger the real-time update of the customizable avatar in the mobile devices.

21. The method according to claim 19, wherein the real-time update of the customizable avatar is based on caller identification information stored in the mobile devices.

22. A method of using a mobile avatar in a wireless network, comprising:
enabling a service subscriber to customize the mobile avatar;
associating the customized mobile avatar with calling line identification information of the service subscriber across the wireless network; and
displaying the mobile avatar upon receipt of a call from the service subscriber.

23. The method according to claim 22, wherein the mobile avatar is dynamically updated each time the service subscriber customizes the mobile avatar.

24. The method according to claim 22, wherein the mobile avatar is stored in a mobile client of a recipient of the call.

25. The method according to claim 22, wherein the mobile avatar is customized by accessing an Internet avatar creation service via a wireless application protocol interface.

26. A method downloading a mobile avatar, comprising:
determining whether a mobile avatar stored in a mobile client of a wireless network matches a current mobile avatar of a subscriber; and
automatically downloading the current mobile avatar to the mobile client upon determining that the mobile avatar in the mobile client does not match the current mobile avatar of the subscriber.

27. A method of providing mobile avatar caller identification service in a wireless network, comprising:
linking caller identification information transmitted from mobile devices to stored mobile avatars in accordance with the caller identification information; and
retrieving at least one of the mobile avatars in accordance with the linkage and displaying the at least one of the mobile avatars based on caller identification information of an incoming call.

28. A system for distributing mobile avatars across a wireless network, comprising:
a plurality of mobile clients exchanging the mobile avatars across the wireless network; and
a server having a database storing the mobile avatars in association with caller identification information of the mobile clients and distributing the mobile avatars to the mobile clients in accordance with caller identification information of a call executed between the mobile clients.

29. The system according to claim 28, wherein the server is a web server.

30. The system according to claim 28, wherein at least one of the mobile clients is associated with multiple mobile avatars to be distributed across the wireless network in accordance with a preference set using the at least one of the mobile clients.

31. The system according to claim 29, wherein the preference set using the at least one of the mobile clients is based on context of the call.

32. The system according to claim 28, wherein the stored mobile avatars are updated and the server distributes the updated mobile avatars to the mobile clients when the call is executed between the clients.

33. A method of distributing a mobile avatar across a wireless network, comprising:
verifying whether a recipient of a call is registered to a mobile avatar caller identification service of a subscriber; and
transmitting a mobile avatar of the subscriber to a mobile device of the recipient based on caller identification information of the subscriber upon verifying that the recipient of the call is registered to mobile avatar caller identification service of the subscriber.

34. The method according to claim 33, wherein the recipient is verified using caller identification and password information of the recipient.

35. A system for distributing mobile avatars across a wireless network, comprising:
a plurality of mobile clients exchanging the mobile avatars across the wireless network, the mobile avatars corresponding to the mobile clients based on caller identification information; and
a server monitoring status of the mobile avatars and correspondingly downloading real-time updates of the mobile avatars to the mobile clients.

36. A method of distributing a mobile avatar using a mobile client of a wireless network, comprising:
determining whether the mobile client includes a mobile avatar in association with caller identification information of an incoming call; and
displaying the mobile avatar associated with the caller identification information of the incoming call using the mobile client.

37. The method according to claim 36, wherein the incoming call is not connected until verifying that the mobile avatar in the mobile client is a current version.

38. The method according to claim 36, wherein a current version of the mobile avatar is downloaded to other mobile clients in the wireless network.

39. The method according to claim 36, wherein the incoming call is intercepted by the mobile client to determine whether the mobile client includes the mobile avatar in association with caller identification information of the incoming call.

40. The method according to claim 36, further comprising:
downloading a current version of the mobile avatar upon determining that the mobile client does not contain the current version of the mobile avatar.

41. The method according to claim 40, wherein the downloading of the current version of the mobile avatar is executed during call conversation.

42. The method according to claim 40, wherein downloading of the current version of the mobile avatar is executed periodically.

43. The method according to claim 41, wherein a record of the downloading is maintained and subsequent downloads of the mobile avatar are executed in accordance with the record.

44. A method, comprising:
locally storing mobile avatars to mobile devices in a wireless network, the mobile avatars being stored based on caller identification information; and
executing a real-time update of at least one of the mobile avatars upon determining that the at least one of the mobile avatars has been updated.

45. A computer readable storage having a program stored there for controlling a computer to execute operations including distributing a mobile avatar, comprising:
storing a mobile avatar of a service subscriber in mobile clients across a wireless network; and
automatically updating the mobile avatar in the mobile clients in accordance with subscription information identifying the service subscriber and displaying the mobile avatar via the mobile clients upon receipt of a call from the service subscriber.

46. A system, comprising:
a server storing customizable avatars of subscribers in accordance with caller identification information of the subscribers; and
a handheld device displaying a real-time update of the customizable avatars in accordance with caller identification information associated with the subscribers upon determining that the customizable avatars have been modified.

47. The system according to claim 46, wherein the server transmits a short message service message to the handheld device from the server, and the short message service message triggers the handheld device to download the real-time update of the customizable avatars.

48. A computer readable storage having a data structure for distributing a customizable mobile avatar and controlling a computer using the data structure, comprising:
a database storing caller identification information of a user in association with the user's customizable mobile avatar and updates thereto for distribution of the customizable mobile avatar across a network in relation to the user.
